# EUROPEAN PATENT APPLICATION

(11) **EP 1 333 058 A1**
(43) Date of publication of application: **06.08.2003**
(21) Application number: 02075463.6
(22) Date of filing: 31.01.2002
(51) Int. Cl.: C08L 53/02, C08F 297/04, C08F 8/04

(54) **Modified styrenic block copolymer and compounds thereof having improved mechanical properties and processability**

(71) Applicant: KRATON Polymers Research B.V., 1031 CM Amsterdam (NL)
(72) Inventor: Joly, Gert Johan, 1348 Ottignies-LLN (BE); Maris, Catherine Augusta Louis, 1348 Ottignies-LLN (BE); Moerenhout, Jaak Lodewijk, 1348 Ottignies-LLN (BE); Oosterbosch, Sonja Marie, 1348 Ottignies-LLN (BE)
(74) Representative: Kortekaas, Marcellinus C. J. A.

(57) **Abstract**

The invention concerns a styrenic block copolymer and compounds thereof with improved mechanical properties and processability, wherein the styrenic block copolymer comprising at least two poly(styrene) blocks separated by a hydrogenated polybutadiene block, characterized in that
(i) the polystyrene content (PSC) is from 10 to 29 % by weight (%w)
(ii) the molecular weight of the polystyrene blocks is in the range of from 6,000 to 9,000
(iii) the total apparent molecular weight of the styrenic block copolymer is in the range of from 80,000 to 150,000 and
(iv) the 1,2-vinyl content in the polybutadiene block is in the range of from 60 to 80 % (mol/mol in the polybutadiene block).

## Description

### Field of the Invention

The invention relates to a modified styrenic block copolymer and compounds thereof with improved mechanical properties and processability. In particular, the invention relates to a modified hydrogenated styrene-butadiene block copolymer and compounds thereof. The invention also relates to the preparation of extrudates such as films and fibers made of such compounds.

### Background of the Invention

Elastomeric compounds which can be easily extruded, spunbond or melt blown into elastic fibers or films having low stress relaxation, low hysteresis or permanent set, and high recoverable energy are described in United States Patents Nos. 4,663,220, 4,789,699, 4,970,259, 5,093,422, 5,705,55 6 and many others. The elastomeric fibers or films are useful in making a variety of applications such as diaper waistbands and non-woven fabrics.

Polystyrene-poly(ethylene-butylene)-polystyrene elastomeric block copolymers have been compounded with other materials such as, for example, polyolefins and tackifying resins to form extrudable elastomeric compositions which can be more easily extruded into elastic fibers or films having improved processing and/or bonding properties. Processes for making cast extruded films, extrusion blown films, extruded fibers, filaments, non-wovens and such like have high requirements around viscosity of the compound. At the same time, applications of these extrudates in personal hygiene, food wrapping and the like result in stringent requirements on mechanical behavior; a combination of stiffness (high modulus), and excellent elasticity (good stress-relaxation and low hysteresis and permanent set) is needed. One of the greatest challenges in this field is to find a good balance between flow/viscosity and the mechanical properties mentioned above.

It is an object of the present invention to provide a modified block copolymer and compounds thereof that have excellent balance of properties in personal hygiene applications (fibers, filaments, and non-wovens), and that in addition in food-wrap applications results in low anisotropy: i.e., the properties of final film are (almost) equal when measured in machine direction (MD) or traverse direction (TD).

### Summary of the Invention

Accordingly, an styrenic block copolymer is provided comprising at least two poly(styrene) blocks separated by a hydrogenated polybutadiene block, characterized in that
(i) the polystyrene content (PSC) is from 10 to 29 % by weight (%w) ;
(ii) the molecular weight of the polystyrene blocks is in the range of from 6,000 to 9,000;
(iii) the total apparent molecular weight of the styrenic block copolymer is in the range of from 80,000 to 150,000 and
(iv) the 1,2-vinyl content in the polybutadiene block is in the range of from 60 to 80 % (mol/mol in the polybutadiene block).

In addition compounds are provided comprising one or more styrenic block copolymers and one or more compounding additives, which comprise from 5 to 90 %w of the above polymer. In particular, a compound is provided for personal hygiene applications (fibers, filaments and non-wovens) (EMBODIMENT 1). In addition, a compound is provided based on the above polymer for use as core layer in multilayer films, as used in foodwrap applications EMBODIMENT 2).

### Detailed description of the invention

The block copolymer according to the present invention may be branched or linear, and may be a triblock, tetrablock, or multiblock. Preferably, it has a structure represented by the following general formulae
S-EB-S (1), or (S-EB)ₙ-X (2),
wherein each S independently is a polymer block of styrene, and EB is a hydrogenated polymer block of butadiene, n is an integer equal to or greater than 2, and X is the residue of a coupling agent.

The S polymer block may contain other aromatic vinyl compounds such as alpha-methylstyrene, p-methylstyrene, o-methylstyrene, p-tert.butylstyrene, dimethylstyrene, and vinyl naphthalene or even composed thereof. However, styrene is particularly preferred from the viewpoints of easy availability, reactivity, and physical properties of the resulting block copolymers. The S polymer block may also contain minor amounts of comonomers other than an aromatic vinyl compound, e.g., up to 5 %w of a copolymerizable monomer such as butadiene and/or isoprene (based on the weight of the total block). These polymer blocks S have a true molecular weight in the range from 6,000 to 9,000, preferably from 7,500 to 8,500.

The polymer midblock (EB) is made of hydrogenized, polymerized butadiene. Although not preferred, it too may contain minor amounts of comonomers, e.g. up to 5 %w of a copolymerizable monomer such as styrene (based on the weight of the total block).

In the block copolymers according to the present invention, the PSC is in the range of 10-29 %w, preferably 17-24 %w based on the total block copolymer. The 1,2-vinyl content in the midblock is in the range of 60 to 80%, preferably in the range of 65 to 75%.

The block copolymers according to the present invention each preferably have a total apparent molecular weight (Mw, determined by Gel Permeation Chromatography and expressed in terms of polystyrene) ranging from 80,000 to 150,000, preferably from 100,000 to 120,000 (using the method described by J.R. Runyon et al in J. Polym. Sci., 13, 2359 (1969)).

The block copolymers according to the present invention can be made e.g. by coupling living diblock copolymer prepared by anionic polymerization with a coupling agent or by sequential polymerization. The latter is preferred.

Compounds according to EMBODIMENT 1 of the present invention preferably comprise at least 50 %w of at least one block copolymer of the present invention; a polyolefin in an amount of from 10 to 30 %w; a polystyrene block compatible resin in an amount of at least 5 %w; and at least 3 %w of a hydrogenated polybutadiene compatible resin (%w on the total compound). Such compounds may comprise styrenic block copolymers other than those of the present invention in an amount of up to 10 % on the total styrenic block copolymer content.

The polyolefin used in the compounds of EMBODIMENT 1 is preferably polypropylene (PP) or polyethylene (PE), more preferably a high MFR PP (i.e., having a melt flow rate as determined at 230 °C/2.16 kg, in accordance to ASTM D1238-95 of greater than 400 gr/10 min.). Suitable polyolefins having an MFR of about 800 gr/10 min are "VALTEC" HH442 or "MOPLEN" HF568 by Basell (trademarks), "BORFLOW" HL508 by Borealis and "MIRAEPOL PA189V" by PolyMirae (trademarks). The polyolefin is preferably used in an amount of from 15 to 25 %w (on the total compound).

The polystyrene block compatible resin may be selected from the group of may be selected from the group of coumarone-indene resin, polyindene resin, poly(methyl indene) resin, polystyrene resin, vinyltoluene-alphamethylstyrene resin, alphamethylstyrene resin and polyphenylene ether, in particular poly(2,6-dimethyl-1,4-phenylene ether). Such resins are e.g. sold under the trademarks "HERCURES", "ENDEX", "KRISTALLEX", "NEVCHEM" and "PICCOTEX". A very suitable resin is "KRISTALLEX" F-100. The compound preferably comprises from 8 to 12 %w of the polystyrene block compatible resin.

Resins compatible with the hydrogenated polybutadiene (mid)block may be selected from the group consisting of compatible C₅ hydrocarbon resins, hydrogenated C₅ hydrocarbon resins, styrenated C₅ resins, C₅/C₉ resins, styrenated terpene resins, fully hydrogenated or partially hydrogenated C₉ hydrocarbon resins, rosins esters, rosins derivatives and mixtures thereof. These resins are e.g. sold under the trademarks "REGALITE", "REGALREZ", "ESCOREZ" and "ARKON". A very suitable resin is "REGALITE" R-1125. The compound preferably comprises from 5 to 10 %w of the (mid)block compatible resin.

The compounds according to EMBODIMENT 2 of the present invention preferably comprises from 5 to 25% by weight of the styrenic block copolymer of the present invention; at least 70% by weight of a polyolefin; and optionally up to 25% of a hydrogenated polybutadiene compatible resin.

In this embodiment, the polyolefin is preferably a random PP copolymer, most preferably a copolymer of propylene and ethylene/octene, with flexural modulus smaller than 300 MPa (ASTM D-790).

The hydrogenated polybutadiene compatible resins may be selected from those described in EMBODIMENT 1.

The compounds of the embodiments may contain a plasticizer. However, as plasticizers have the tendency to migrate, their presence is typically to be avoided.

Other ingredients may be incorporated into the compounds according to the present invention. For instance, processing aids can be added or colorants, as well as antioxidants and other stabilizing ingredients to protect the compounds from degradation induced by heat, light and processing or during storage.

### Preparation of the composition

No particular limitation is imposed on the preparation process of the compound of the present invention. Therefore, there may be used any process such as a mechanically mixing process: e.g., a Banbury mixer or a single- or twin-screw extruder provided with adequate mixing elements, thereby obtaining an intimate mixture of the ingredients.

### Use of the compound

Compounds according to the present invention may be applied, e.g. by extrusion, in the preparation of films (EMBODIMENT 2, e.g. as disclosed in EP-A-0,860,272 or EP-A-0,501,296) and fibers, filaments and non-wovens (EMBODIMENT 1). The styrenic block copolymer of the present invention may also find application in other end-uses, such as adhesives, modified asphalt compositions and such like.

The present invention will hereinafter be described more specifically by reference to the following examples and comparative examples. However, this invention is not limited to these examples only. Incidentally, all designations of "part" or "parts" and "%" as will be used in the following examples mean part or parts by weight and percentage by weight unless expressly noted. The measurements of physical properties were conducted in accordance with the following methods. Test methods
- melt flow rate (MFR): ASTM D1238-95 (230°C, 2.16kg)
- tensile properties on fibers:
   hysteresis: Strands produced by melt index tester are clamped in a mechanical tester (Zwick). Strands are elongated to 150% extension at a speed of 100 mm/sec (load step), and immediately relaxed to zero force (unload step). A second cycle follows right after the first one. Forces at 50 and 100% elongation are recorded for the first cycle. Hysteresis is measured as the difference in energy between the load and the unload step. Permanent set is measured as the difference between the original sample length of the first cycle (force equals zero) and the sample length before the second cycle (force equals zero).
   stress-relaxation: Strands produced by melt index tester are clamped in a mechanical tester (Zwick). Strand are elongated to 50% extension, in a hot-air oven at 40°C. The samples are held in that position for 2 hrs. The force decay is measured. The stress-relaxation is expressed as the ratio between the final force and the initial force (equaling the percentage of retained stress).
- tensile properties according to ASTM D882-81 (tested on films)

**Table 1**

| (ingredients) | |
|---|---|
| Styrenic Block copolymers: | |
| SBC A comp. | A linear SEBS having a diblock content of about 30%; a PSC of 13.3 %, a MW (PS) of about 5,300; an apparent MW of about 145,000 and a vinyl content of 45 % |
| SBC B | A linear SEBS having a PSC of 21 %, a MW (PS) of about 8,000; an apparent MW of about 115,000 and a vinyl content of 65 % |
| SBC C comp. | A linear SEBS having a PSC of 20.5 %, a MW (PS) of about 10,000; an apparent MW of about 150,000 and a vinyl content of 68 % |
| SBC D | A linear SEBS having a PSC of 21 %, a MW (PS) of about 7,000; an apparent MW of about 110,000 and a vinyl content of 74 % |
| SBC E comp. | A linear SEBS having a PSC of 30 %, a MW (PS) of about 7,000; an apparent MW of about 80,000 and a vinyl content of 40 % |

| Polyolefins: | |
|---|---|
| HF568X | "VALTEC" HH442H or "MOPLEN" HF568X, a PP having an MFR of 800 g/10 min and a Modulus of 1500 MPa |
| PA189V | "MiraePol" PA189V, a PP having an MRF of 900 g/10 min |
| Q100F | "ADFLEX" Q100F, a random polypropylene copolymer having an MFR of 0.6 g/10 min and a Modulus of 80 MPa |

| Endblock compatible resins: | |
|---|---|
| F-100 | "KRISTALLEX" F-100; an alpha-methylstyrene resin |

| Midblock compatible resins | |
|---|---|
| R-1125 | "REGALITE" R-1125; a fully hydrogenated C9 hydrocarbon resin |

### EXAMPLES 1 - 3

Compounds for fiber/non-woven use were prepared on a 25mm Werner & Pfleiderer ZSK25 co-rotating twin-screw extruder with 49 L/D. The ingredients from Table 1 were pre-blended according to the amounts in Table 2 in a Papenmeier internal mixer, and fed into one feeding port. Strands were cooled in a water-bath and granulated using a strand-cutter.

Strands were prepared with a Gottfert melt index tester as described in ASTM D-1238-95. The mechanical properties of these strands were measured, and the results are included in Table 2.

**TABLE 2**

| (Fiber/non-woven compound formulation) | | | |
|---|---|---|---|
| Examples | 1 | 2 | 3 |
| SBC B | 60 | 65 | 65 |
| HF568X | 20 | 15 | 20 |
| F-100 | 10 | 10 | 10 |
| R-1125 | 10 | 10 | 5 |

| Properties: | | | |
|---|---|---|---|
| MFR (g/10min) | 49 | 37 | 30 |
| Stress-relaxation (%) | n.m. | 42 | 40 |
| Permanent set (%) | 17 | 12 | 14 |
| Modulus @ 50% elongation (MPa) | 3.17 | 2.32 | 3.18 |

### Conclusion

The compound of Example 3 is based on the right polymer at the right amount. Accordingly, it has the right balance of properties. On the other hand, the compound of Example 1 has a very high MFR and a high modulus, but a permanent set that is too high. The compound of Example 2 has a good MFR and elasticity (stress-relaxation and permanent set), but a too low modulus. In addition, a large number of similar formulations have been made on the basis of SBC A; SBC C and SBC E. The Examples on SBC A had a too low modulus and stress-relaxation; the example on SBC C had a too low modulus and MFR and finally the examples on SBC E had a too low MFR.

### EXAMPLES 4 - 6

Compounds according to EMBODIMENT 2 were prepared on a 25mm Werner & Pfleiderer ZSK25 co-rotating twin-screw extruder with 49 L/D. The ingredients from Table 1 were pre-blended according to the amounts in Table 3 in a Papenmeier internal mixer, and fed into one feeding port. Strands were cooled in a water-bath and granulated using a strand-cutter. These compounds were used for film blowing on a Plastik Maschinebau equipment. (The ingredients may also be fed directly into the feeding system of the film blowing line.)

In Table 3 the properties are listed of a monolayer blown film (2*15 µm thick) produced with a blow up ratio of 2.4 using an extruder with a die gap of 1 mm.

### Conclusion

All these formulations could be successfully blown into monolayer films. These films have no yield point in the tensile graph, whereas a pure Adflex Q100F film has. Example 5 additionally has good mechanical properties, combined with low anisotropy, which is an advantage for applications where the film is stretched in the two directions, like food-wrap film.

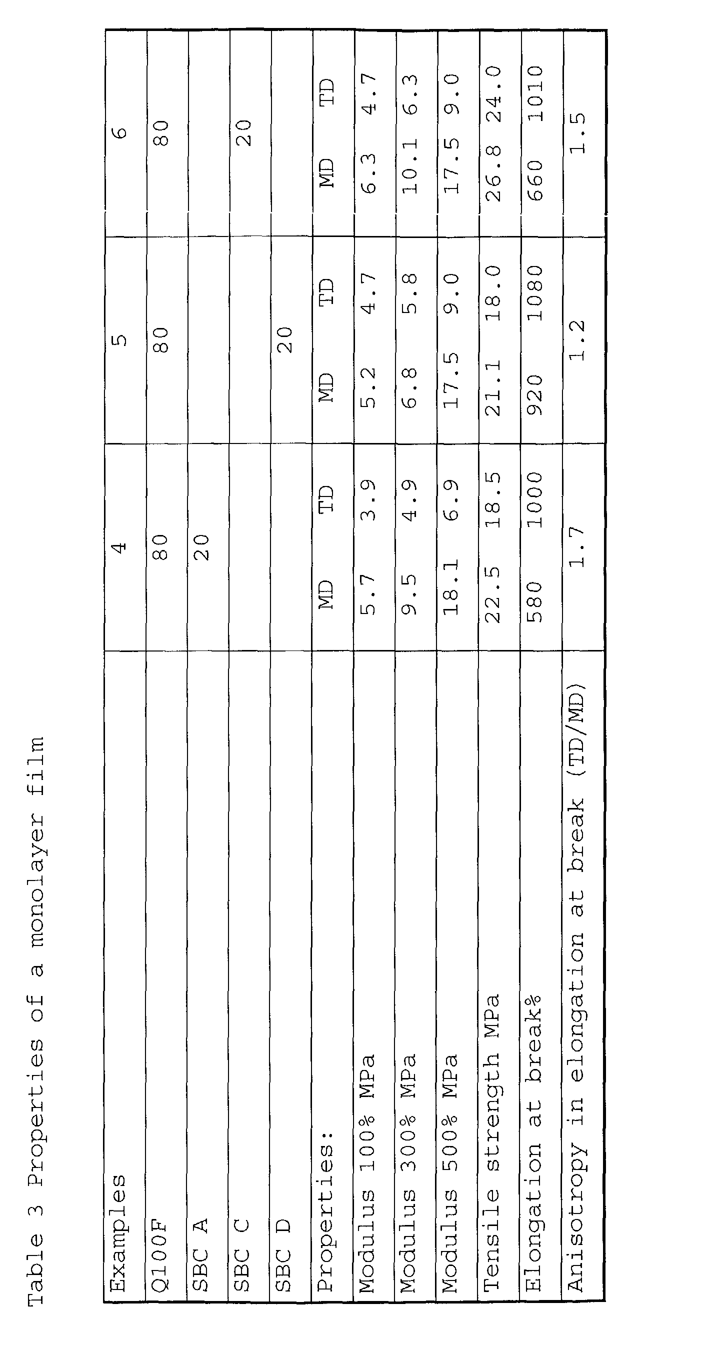

## Claims

1. A styrenic block copolymer comprising at least two poly(styrene) blocks separated by a hydrogenated polybutadiene block, **characterized in that**
(i) the polystyrene content (PSC) is from 10 to 29 % by weight (%w)
(ii) the molecular weight of the polystyrene blocks is in the range of from 6,000 to 9,000
(iii) the total apparent molecular weight of the styrenic block copolymer is in the range of from 80,000 to 150,000 and
(iv) the 1,2-vinyl content in the polybutadiene block is in the range of from 60 to 80 % (mol/mol in the polybutadiene block).

2. A styrenic block copolymer according to claim 1, represented by the general formulae
S-EB-S (1), or (S-EB)ₙ-X (2),
wherein each S independently is a polymer block of styrene, and EB is a hydrogenated polymer block of butadiene, n is an integer equal to or greater than 2, and X is the residue of a coupling agent.

3. A styrenic block copolymer as claimed in either of claim 1 or 2, wherein the poly(styrene) blocks have a true molecular weight in the range from 7,500 to 8,500.

4. A styrenic block copolymer as claimed in any one of claims 1 to 3, wherein the PSC is from 17 to 24 %w.

5. A styrenic block copolymer as claimed in any one of claims 1 to 4, wherein the 1,2-vinyl content in the polybutadiene block is in the range of from 65 to 75 %.

6. A styrenic block copolymer as claimed in any one of claims 1 to 5, wherein the apparent molecular weight of the styrenic block copolymer is in the range from 100,000 to 120,000.

7. A compound comprising one or more styrenic block copolymers and one or more compounding additives, which comprises from 5 to 90 %w of the polymer of any one of claims 1 to 6.

8. A compound according to claim 7, comprising at least 50 %w of at least one block copolymer as claimed in any one of claims 1 to 6; a polyolefin in an amount of from 10 to 30 %w; a polystyrene block compatible resin in an amount of at least 5 %w; and at least 3 %w of a hydrogenated polybutadiene compatible resin (%w on the total compound, totaling 100%).

9. A compound according to claim 8, wherein the polyolefin is a polypropylene having a melt flow rate greater than 400 gr/10 min (ASTM D1238-95).

10. A compound according to claim 7, comprising from 5 to 25 %w of styrenic block copolymer; at least 70 %w of a polyolefin; and optionally up to 25 %w of a hydrogenated polybutadiene compatible resin (%w on the total compound, totaling 100%).

11. A compound according to claim 10, wherein the polyolefin is a random propylene copolymer with a flexural modulus smaller than 300 MPa.

12. Fibers, filaments or non-wovens based on a compound of claim 8 or 9.

13. Mono- or multilayer film comprising a (core) layer based on a compound of claim 10 or 11.
